# EUROPEAN PATENT APPLICATION

(11) **EP 4 108 318 A1**
(43) Date of publication of application: **28.12.2022**
(21) Application number: 21181005.6
(22) Date of filing: 22.06.2021
(51) Int. Cl.: B01D 63/08

(54) **CROSSFLOW FILTER DEVICE**

(71) Applicant: Sartorius Stedim Lab Ltd., Stonehouse, Gloucestershire GL10 3UT (GB)
(72) Inventor: DAVIDSON, Thomas, Dursley, GL11 4EF (GB); GREEN, Adam, Weston-super-Mare, BS23 2DW (GB)
(74) Representative: Mewburn Ellis LLP

(57) **Abstract**

A crossflow filter device for filtering a pressurised feed liquid is provided. The crossflow filter device comprises: a filter membrane; a flow channel for the pressurised feed liquid which extends in a path over a retentate surface of the membrane such that the direction of flow in the channel is tangential to the retentate surface, and a filtrate derived from the feed liquid passes through the membrane leaving retentate liquid in the flow channel; and a collection chamber for the filtrate formed on an opposite, filtrate surface of the membrane. The crossflow filter device further comprises a sealed housing having a retentate side and a filtrate side which enclose therebetween the flow channel, the filter membrane and the collection chamber. The path for the flow channel winds back and forth over the retentate surface of the membrane producing plural hairpin bends, and the crossflow filter device further comprises flow channel guide walls provided at an inner surface of the retentate side of the housing to define the path of the flow channel over the retentate surface of the membrane. The respective guide wall defining the line of the inner radius of each hairpin bend is shaped such that retentate liquid flowing along that guide wall has to turn through at least 270° to complete the hairpin bend.

## Description

### Field of the Invention

The present disclosure relates to crossflow filter devices for filtering pressurised feed liquids

### Background

Crossflow filtration is a process in which a pressurised feed liquid is forced to flow tangentially over a membrane permeable to a filtrate derivable from the feed liquid. As the feed liquid flows over one side of the membrane, the filtrate passes through to the other side of the membrane, leaving behind a retentate liquid, which is the feed liquid depleted of filtrate. Media in the feed liquid that do not pass through the membrane are thus concentrated in the retentate liquid. Possible uses of crossflow filtration are:
- Concentration and separation of therapeutic biologics, e.g. monoclonal antibodies, viral vectors, recombinant proteins.
- Concentration and separation of miscellaneous proteins, polysaccharides and other biomolecules.
- Concentration and separation of inorganics and other macromolecules from water samples, etc.
- Deproteinization of samples.
- Buffer exchange and diafiltration.

Typically, the feed liquid flows in a cyclic manner into a crossflow filter device, over the membrane, and out again, with the media concentrating in the retentate liquid with each such cycle. The filtrate which has passed through the membrane exits the device through an outlet on the opposite side of the membrane. A flow restrictor at the retentate outlet is used to create pressure within the device.

Example devices are the Vivaflow 50^{™}, Vivaflow 50R^{™} and Vivaflow 200^{™} available from Sartorius.

The Vivaflow 50R^{™} is formed as a cassette which has rigid, clear plastic, retentate-side and filtrate-side plates. These plates are thick enough to resist the stresses produced by the pressure of throughflowing liquids and are bolted together around their perimeters. The cassette housing thus-formed sealingly contains a flow channel for the feed liquid / retentate liquid, a permeable membrane, and a plate-like, porous support body which supports the membrane while allowing relatively unimpeded passage therethrough of liquids, such as the filtrate. The cassette further features an inlet in the retentate-side plate for the feed liquid to the flow channel, an outlet in the retentate-side plate for the retentate liquid from the flow channel, and a further outlet in the filtrate-side plate for the filtrate which has passed through the membrane and the support body. The flow channel shuttles back and forth over the retentate surface of the membrane, which helps to expose all the feed liquid to a large surface area of the membrane, and also introduces a convoluted path to create eddies and break up linear flow of the feed liquid, thus improving the filtration efficiency of the cassette.

In the Vivaflow 50R^{™}, the flow channel is formed as a recess in the inner surface of the retentate-side plate. When the cassette is assembled, the retentate-side plate, membrane, support body and filtrate-side plate are stacked in that order, and the retentate-side and filtrate-side plates are then bolted together. As a result, the raised parts of the inner surface of the retentate-side plate which are outside the recess press against the membrane, and the front-to-back depth of the flow channel is just the depth of the recess. However, this arrangement, while confining the flow path of the feed liquid to the flow channel, allows some of the feed liquid to short-circuit the shuttling flow channel due to an incomplete seal being formed between the raised parts of the inner surface of the retentate-side plate and the membrane. Such short-circuiting impairs the filtration efficiency of the Vivaflow 200^{™}.

The Vivaflow 200^{™} performs in the same way as the Vivaflow 50R^{™}, but a difference being that the feed inlet splits the fluid and directs across the retentate surfaces of two membranes rather than one. The two membranes sandwich a filtrate collection chamber containing the porous support body, so that filtrate enters from both sides rather than one. A benefit of this is that a larger membrane surface area is achieved, increasing filtration speed whilst minimising the overall device size.

The Vivaflow 50^{™} is a similar, single-use, crossflow filter device, also available from Sartorius. It performs the same function as the Vivaflow 50R^{™} and Vivaflow 200^{™} but has some constructional differences. For example, its retentate-side and filtrate-side plates are wedged into a thick plastic sleeve to press them together.

WO 2020/173762 proposes an improved crossflow filter device in which guide walls define the path of the flow channel over the retentate surface of the membrane, the guide walls forming a fluid tight seal with the filter membrane. In this way, the guide walls can provide effective sealing around the edges of the flow channel, and thereby substantially eliminate short-circuiting of the flow channel by the feed liquid.

Nonetheless, further improvements in crossflow filter devices are sought, e.g. to improve ease of manufacture and/or to increase turbulence in the retentate liquid thus improving the filtration efficiency of the device. The present invention has been devised in light of such considerations.

### Summary of the Invention

According to a first aspect of the invention, there is provided a crossflow filter device for filtering a pressurised feed liquid wherein:
the crossflow filter device comprises: a filter membrane; a flow channel for the pressurised feed liquid which extends in a path over a retentate surface of the membrane such that the direction of flow in the channel is tangential to the retentate surface, and a filtrate derived from the feed liquid passes through the membrane leaving retentate liquid in the flow channel; and a collection chamber for the filtrate formed on an opposite, filtrate surface of the membrane;
the crossflow filter device further comprises a sealed housing having a retentate side and a filtrate side which enclose therebetween the flow channel, the filter membrane and the collection chamber;
the path for the flow channel winds back and forth over the retentate surface of the membrane producing plural hairpin bends, and the crossflow filter device further comprises flow channel guide walls provided at an inner surface of the retentate side of the housing to define the path of the flow channel over the retentate surface of the membrane; and
the respective guide wall defining the line of the inner radius of each hairpin bend is shaped such that retentate liquid flowing along that guide wall has to turn through at least 270° to complete the hairpin bend.

Advantageously, by forcing the retentate liquid around such bends, the path of the liquid is made more convoluted, significantly increasing turbulence in the liquid and thereby improving the filtration efficiency of the device through turbulence-induced chaotic changes in pressure and flow velocity.

Increasing the angle which the retentate liquid has to turn through at each hairpin bend can further increase turbulence and improve the filtration efficiency. Accordingly, the respective guide wall defining the line of the inner radius of each hairpin bend is preferably shaped such that retentate liquid flowing along that guide wall has to turn through about 360° to complete the hairpin bend.

Additionally or alternatively, at the upstream side of each hairpin bend, the line of the guide wall as it arrives at the hairpin bend may make an initial turn of about 90° in the opposite rotational sense of the subsequent turn which completes the ensuing hairpin. This initial turn can also increase turbulence and improve the filtration efficiency.

In the plane of the membrane, and as between successive hairpin bends: the distance between the exit point of the line of the inner radius of one hairpin bend to the entry point of the line of the inner radius of the next hairpin bend may be no more than twice the minimum width of the flow channel measured transversely to the flow direction of the retentate liquid. Such an arrangement requires that successive hairpin bends are located closely together (relative to the width of the flow channel), whereby the turbulence produced in the retentate liquid by one hairpin bend is quickly succeeded by the turbulence produced by the next, helping to maintain an improved filtration efficiency along the length of the flow channel.

The line of the inner radius of each hairpin bend may be substantially polygonal, having an alternating series of corners and straights. Preferably, the line of the inner radius of each hairpin bend substantially follows a square or rectangle perimeter line. The alternating series of corners and straights helps to break up laminar flow in the retentate liquid, which is another factor promoting the production of turbulence.

The line of the outer radius of each hairpin bend may be substantially polygonal, e.g. to match the line of the inner radius. The alternating series of corners and straights of the polygonal line of the outer radius can help to break up laminar flow in the retentate liquid and promote the production of turbulence.

The flow channel may have a width, measured transversely to the flow direction of the retentate liquid in the plane of the membrane, over the length of the flow channel such that the ratio of the minimum width to the maximum width is greater than 0.5, preferably is greater than 0.6 and more preferably is greater than 0.7. In this way, constrictions in the flow channel which would impede the flow of retentate liquid can be avoided.

The path for the flow channel may wind back and forth over the retentate surface of the membrane to produce at least three hairpin bends.

The flow channel guide walls may be resiliently deformable, thereby deforming and sealingly engaging with the filter membrane to form a fluid tight seal therewith. In this way, effective sealing around the edges of the flow channel can be assured, thereby substantially eliminating any short-circuiting of the flow channel by the feed liquid. Conveniently, for example, the guide walls may be formed by a resiliently deformable gasket such that the guide walls also sealingly engage with the inner surface of the retentate side of the housing. Such a gasket can accommodate and seal to different types of membrane, allowing different types of membrane to be used in the same basic device.

The crossflow filter device may further comprise plural interconnecting members which extend outside the path of the flow channel to join the inner surface of the retentate side of the housing to an inner surface of the filtrate side of the housing and thereby strengthen the housing. The above-mentioned gasket may then have respective locating eyes through which the interconnecting members pass to locate the gasket relative to the inner surface of the retentate side of the housing, the locating eyes surrounding the respective interconnecting members on all sides in the plane of the membrane. Advantageously, such an arrangement allows the gasket to be provided as a separate component which is easily assembled to and located in the device, the interconnecting members helping to prevent movement of the gasket during and after assembly relative to the membrane and the retentate side of the housing.

Conveniently, the interconnecting members may be respectively located at the centres of the hairpin bends, such that the locating eyes are formed by the guide walls which define the inner radii of the hairpin bends.

Although the gasket and interconnecting members may be used in a device which has the at least 270° hairpin bends, they have more general applicability to crossflow filter devices. Accordingly, in a second aspect of the invention, there is provided a crossflow filter device for filtering a pressurised feed liquid wherein:
the crossflow filter device comprises: a filter membrane; a flow channel for the pressurised feed liquid which extends in a path over a retentate surface of the membrane such that the direction of flow in the channel is tangential to the retentate surface, and a filtrate derived from the feed liquid passes through the membrane leaving retentate liquid in the flow channel; and a collection chamber for the filtrate formed on an opposite, filtrate surface of the membrane;
the crossflow filter device further comprises a sealed housing having a retentate side and a filtrate side which enclose therebetween the flow channel, the filter membrane and the collection chamber;
the path for the flow channel winds back and forth over the retentate surface of the membrane, and the crossflow filter device further comprises flow channel guide walls formed by a resiliently deformable gasket, the guide walls deforming and sealingly engaging with the filter membrane and an inner surface of the retentate side of the housing to form fluid tight seals therewith, and thereby define the path of the flow channel over the retentate surface of the membrane;
the crossflow filter device further comprises plural interconnecting members which extend outside the path of the flow channel to join the inner surface of the retentate side of the housing to an inner surface of the filtrate side of the housing and thereby strengthen the housing; and
the gasket has respective locating eyes through which the interconnecting members pass to locate the gasket relative to the inner surface of the retentate side of the housing, the locating eyes surrounding the respective interconnecting members on all sides in the plane of the membrane.

As mentioned above, advantageously, such an arrangement allows the gasket to be provided as a separate component which is easily assembled to and located in the device, the interconnecting members helping to prevent movement of the gasket during and after assembly relative to the membrane and the retentate side of the housing.

In the device of the first aspect having the interconnecting members, or the device of the second aspect, the interconnecting members may be in the form of cylindrical stakes which extend axially from the inner surface of the retentate side of the housing to an inner surface of the filtrate side of the housing. Providing the interconnecting members in such a form is compatible with locating them at the centres of the bends formed by the flow channel as it winds back and forth over the retentate surface. Conveniently, the interconnecting members may be melt-bonded to the housing.

In the device of the first aspect having the interconnecting members, or the device of the second aspect, each interconnecting member may be a single component which extends uninterrupted from the inner surface of the retentate side of the housing to the inner surface of the filtrate side of the housing, passing through respective apertures formed in the membrane. Another option, however, is for each interconnecting member to be formed from first and second projections which extend from respectively the inner surface of the retentate side of the housing and the inner surface of the filtrate side of the housing, and which meet at the membrane. Such an option may be convenient to implement when the membrane is capable of heat sealing, such that the paired projections and the membrane can be heat welded together where they meet at the membrane. In this case, there is no need to form apertures for the interconnecting members in the membrane, i.e. each interconnecting member can be formed by a given pair of projections and a small region of membrane trapped therebetween.

In the device of the first aspect having the gasket, or the device of the second aspect, the gasket may be formed of elastomer, such as thermoplastic poly-urethane (TPU), natural rubber, silicone rubber, polysilaxane, or latex.

In the device of the first or second aspect, the housing may include: an inlet to the flow channel for the feed liquid; an outlet from the flow channel for the retentate liquid; and an outlet from the collection chamber for the filtrate. In use, external tubes are typically attached to the device at the inlet and outlets, for example such that an external pump can cycle the feed liquid and retentate liquid through the device. Conveniently, the inlet to the flow channel and the outlet from the flow channel may be formed in the retentate side of the housing, and the outlet from the collection chamber may be formed in the filtrate side of the housing. One or more of the inlet and the outlets may include a respective rotating Luer cuff for connection to respective external tubing.

The device of the first or second aspect the housing may further comprises a foraminous support body located within the collection chamber, the support body providing mechanical support to the membrane while allowing relatively unimpeded passage therethrough of the filtrate, e.g. to a filtrate outlet. The support body may be made, for example, of porous plastic. It may be manufactured by sintering plastic particulate. However, other materials and/or manufacturing processes can be used. As an alternative to such a support body, protuberances integrally formed with the housing may project from an inner surface of the filtrate side of the housing to support the membrane, the protuberances allowing relatively unimpeded passage therebetween of the filtrate.

In the device of the first or second aspect, the housing may be formed of transparent material. This allows the operation of the device to be visually monitored by a user. Conveniently, it can be formed of plastic material. However other types of material, such as glass, ceramic or metal may be used for the housing.

In the device of the first or second aspect, the retentate side and filtrate side of the housing may be formed as respective plates which sandwich the flow channel guide walls and the filter membrane (and the foraminous support body if present) therebetween. In particular, the housing may have a retentate-side plate and a filtrate-side plate which are sealed together along respective sealing perimeters to form a cavity therebetween in which the guide walls and the filter membrane (and foraminous support body if present) are housed. An O-ring may be provided around the sealing perimeters to perfect the seal therebetween. The plates may be sealed together by various means, for example: ultrasonic welding, heat staking, gluing, or mechanical interference. The joining of the plates may be performed or supplemented by mechanical fasteners (e.g. screws, bolts, staples, clamps etc.), integral snap-fit connectors, and/or a wedge-fit mechanism. Another option is that the sealed housing further includes a moulded or overmoulded surround which joins the casings together.

The device of the first or second aspect may be sterile, e.g. to a sterility assurance level of at least 10⁻³ and preferably of at least 10⁻⁶. Typical methods for sterilising the device include ethylene oxide gas and radiation. Sterility assurance levels can be validated according to an appropriate standard such as ISO 11135:2014 for ethylene oxide gas and ISO 11137:2006 for radiation. Advantageously, the device can be configured to reduce trapping areas and improve the effectiveness of the chosen sterilisation processes, in particular in the region of the inlet and outlets. Using heat staking, ultrasonic welding, or the like to join parts of the device is also generally beneficial for promoting sterility as this joining process does not require the use of fixtures, fasteners, adhesives or other components that could compromise sterility.

The device of the first or second aspect may be a dual membrane device having a second filter membrane and corresponding flow channel and flow channel guide walls on an opposite side of the collection chamber, i.e. so that the collection chamber is sandwiched between first and second filter membranes, with a first portion of the filtrate passing through the first membrane into the collection chamber, and a remaining second portion of the filtrate passing through the second membrane into the collection chamber. The retentate side of the sealed housing thus becomes a first retentate side, while the filtrate side of the housing can be described as a second retentate side. Typically, the foraminous support body is located within the collection chamber of such a device.

As mentioned above, devices having the interconnecting members and the gasket as a separate component provide advantages during assembly of the device. Accordingly, in a third aspect of the invention, there is provided a method of forming the crossflow filter device according to the first aspect having the gasket, the interconnecting members, the retentate-side plate and the filtrate-side plate or according to the second aspect having the retentate-side plate and the filtrate-side plate, the method including:
providing the retentate-side plate with the interconnecting members joined thereto;
locating the gasket on the retentate-side plate such that the interconnecting members pass through the locating eyes;
providing a filter membrane which has apertures for the interconnecting members, and stacking the membrane on the gasket such that the interconnecting members pass through the apertures; and
joining the filtrate-side plate to ends of the interconnecting members distal from the retentate-side plate to sandwich the flow channel guide walls and the filter membrane between the retentate-side plate and the filtrate-side plate.

The method of the third aspect may further include providing a foraminous support body which has further apertures for the interconnecting members, and stacking the foraminous support body on the stacked membrane before joining the filtrate-side plate to the ends of the interconnecting members such that the interconnecting members pass through the further apertures, and such that, after joining the filtrate-side plate to the ends of the interconnecting members, the foraminous support body is also sandwiched between the retentate-side plate and the filtrate-side plate, the foraminous support body being located within the collection chamber to provide mechanical support to the membrane while allowing relatively unimpeded passage therethrough of the filtrate.

Alternatively, in a fourth aspect of the invention, there is provided a method of forming the crossflow filter device according to the first aspect having the gasket, the interconnecting members, the retentate-side plate and the filtrate-side plate or according to the second aspect having the retentate-side plate and the filtrate-side plate, the method including:
providing the retentate-side plate with first projections extending from the inner surface thereof, and providing the filtrate-side plate with corresponding second projections extending from the inner surface thereof;
locating the gasket on the retentate-side plate such that the first projections pass through the locating eyes;
stacking the membrane on the gasket and ends of the first projections distal from the retentate-side plate; and
stacking the filtrate-side plate on the filter membrane such that the second projections meet their corresponding first projections and trap the filter membrane therebetween to form the interconnecting members, and such that the retentate-side plate and the filtrate-side plate sandwich the flow channel guide walls and the filter membrane therebetween.

The method of the fourth aspect may further include providing a foraminous support body which has apertures for the second projections. Thus, when the filtrate-side plate is stacked on the membrane such that the second projections meet their corresponding first projections and trap the membrane therebetween to form the interconnecting members, the foraminous support body may be positioned between the filtrate-side plate and the membrane with the second projections passing through the apertures. In this way, the foraminous support body can then also be sandwiched between the retentate-side plate and the filtrate-side plate, the foraminous support body being located within the collection chamber to provide mechanical support to the membrane while allowing relatively unimpeded passage therethrough of the filtrate.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Figure 1** shows a perspective view of a crossflow filter device;
**Figure 2** shows a side view of a variant of the crossflow filter device;
**Figure 3** shows schematically a flow channel of the device of Figure 1; and
**Figure 4** shows schematically a flow channel of a further variant of the device of Figures 1 and 3.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

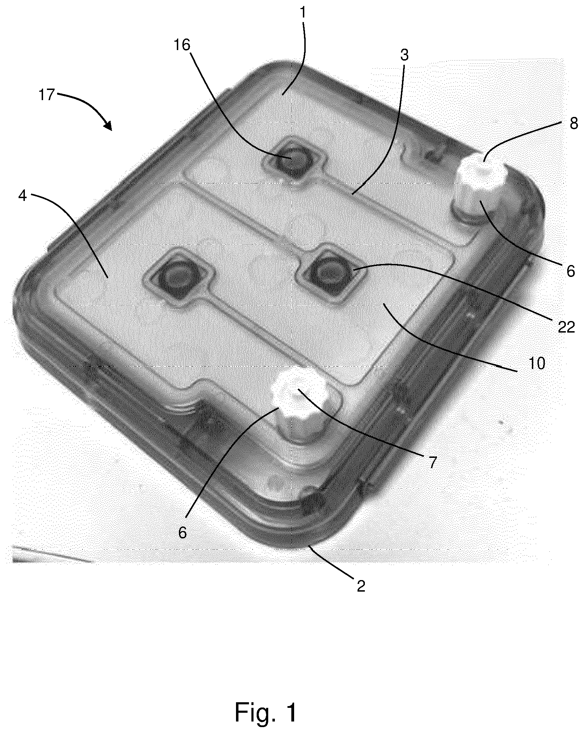

Figure 1 shows a perspective view of a crossflow filter device 17, the housing comprising a retentate-side plate 1 and a filtrate-side plate 2 which define a cavity therebetween. An inlet 7 for flow of a feed liquid into the cavity is formed in the retentate-side plate 1, an outlet 8 for flow of a retentate liquid 8 out of the cavity is formed in the retentate-side plate 1, and an outlet (not visible in Figure 1) for a flow of filtrate out of the cavity is formed in the filtrate-side plate 2.

The feed liquid inlet 7 and the retentate liquid outlet 8 have male Luer connections with respective rotating Luer cuffs 6, while and the filtrate outlet has a female Luer connection. The Luer connections allow external tubing connectors to be attached to the device 17.

The housing plates 1, 2 are formed as respective square plates. Conveniently, the plates 1, 2 may be formed of rigid, transparent plastic material. Between the plates 1, 2 are sandwiched, in order from the retentate side to the filtrate side: flow channel guide walls 3, a filter membrane 4, and a foraminous support body. The transparent nature of the plates allows the guide walls 3 and the filter membrane 4 to be visible in Figure 1, while the foraminous support body is hidden from view in Figure 1 behind the filter membrane. The plates 1, 2 are joined together around their respective perimeters, as discussed in more detail below, to form a sealed module.

The guide walls 3 define the path of a flow channel 10 which winds back and forth over the retentate surface of the membrane 4 from the inlet 7 to the outlet 8, and are formed by a gasket which engages on one side with the inner surface of the retentate-side plate 1 and on the other side with the filter membrane 4. The gasket is made of a medically-safe elastomer, such as TPU, natural rubber, silicone rubber, polysilaxane, or latex, which is highly resistant to leaching. This lowers or avoids any risk of contamination of filtrates and feed liquids / retentates flowing through the device 17. The guide walls 3, being elastically compliant, adapt to and accommodate any irregularities in the retentate surface of the filter membrane 4 and the inner surface of the retentate-side plate 1, forming a good seal around the edges of the flow channel 10. They can thus substantially prevent any short-circuiting of the flow channel 10 by liquid on the flow path 10 from the inlet 7 to the outlet 8. In addition, they can adapt to different types of membrane 4 (such as poly ether sulfone membranes, regenerated cellulose membranes, or cellulose acetate membranes), and can help to prevent damage to any surface treatment of the membrane 4, such as specialised receptors attached to the membrane). Thus the same basic filter device can be used in many different applications, simply by changing the membrane type. In particular, the device 17 can be used to scale-up or scale-down laboratory bench filtration, e.g. for the production of biopharmaceuticals such as antibodies.

The foraminous support body fills a collection chamber for the filtrate created by that part of the housing cavity between the membrane 4 and the inner surface of the filtrate-side plate 2. The support body physically supports the membrane 4 over substantially its entire area, allowing a pressure difference to be established across the membrane 4 that drives the flow of filtrate therethrough. The fora in the body are formed such that filtrate can pass through the body relatively unimpeded en route from the membrane 4 to the outlet via the collection chamber. Conveniently, the body 5 can be a porous plastic body formed by sintering plastic particulate.

In use, external tubing attached to the feed liquid inlet 7 and the retentate liquid outlet 8 are joined to an external pump. Further external tubing attaches to the filtrate outlet and extends to a collection vessel. The pump continuously circulates a feed liquid into the device via the inlet 7, along the flow channel 10 defined by the guide walls 3, and back to the pump as retentate liquid from the outlet 8. The direction of flow of the liquid in the flow channel 10 is tangential to the retentate surface of the membrane 4, and the pressure differential across the membrane 4 drives the flow of the filtrate derived from the feed liquid through the membrane 4. A flow restrictor (not shown) at the retentate outlet 9 is used to create the pressure within the device 17.

The winding back and forth of the flow channel 10 forces all of the feed liquid to pass over a large surface area of the retentate surface of the membrane 4. It also creates eddies and turbulence in the feed liquid, which break up linear flow thereof. More specifically, the path of the flow channel 10 is comprised of a series of consecutive, anti-parallel, switchback runs that span a width of the membrane 4 and are connected by successive hairpin bends.

A result of operating the device is therefore that, as the pump circulates the feed liquid, filtrate derived from the feed liquid passes through the foraminous support body to collect in the collection vessel attached to the filtrate outlet, and media in the feed liquid that do not pass through the membrane 4 concentrate in the retentate liquid.

To form the housing, the housing plates 1, 2 may be sealed together around their respective perimeters by various means, for example: ultrasonic welding, heat staking, gluing, or mechanical interference. The joining of the plates may be performed or supplemented by mechanical fasteners (e.g. screws, bolts, staples, clamps etc.), integral snap-fit connectors, and/or a wedge-fit mechanism. Another option is that the sealed housing further includes a moulded or overmoulded surround which joins the casings together. An O-ring may be provided around the sealing perimeters to perfect the seal therebetween.

Due to their deformability, the guide walls 3 allow variation in the stand-off between the filter membrane 4 and the inner surface of the retentate-side plate 1. To control this standoff, while also (i) strengthening the housing against the pressures which it experiences in operation and (ii) facilitating device assembly (discussed in more detail below), interconnecting members in the form of cylindrical stakes 16 may be provided to physically link the inner surfaces of the housing plates 1, 2. The stakes 16 penetrate, outside the path of the flow channel 10, through dedicated apertures in the membrane 4 and in the support body 5. For example, the stakes 16 can be joined by a suitable joining process, such as melt-bonding, to the inner surface of one of the plates (in this example, the retentate-side plate 1), and on assembly of the device 17 can be joined to the inner surface of the other plate (in this example, the filtrate-side plate 2) by, typically, the same joining process. By rigidifying and strengthening the housing, the stakes 16 allow the housing plates to be manufactured from thinner material than would otherwise be the case.

The device 17 may be produced as sterile, with typical sterilisation methods including ethylene oxide gas and radionuclide, X-ray or electron beam radiation.

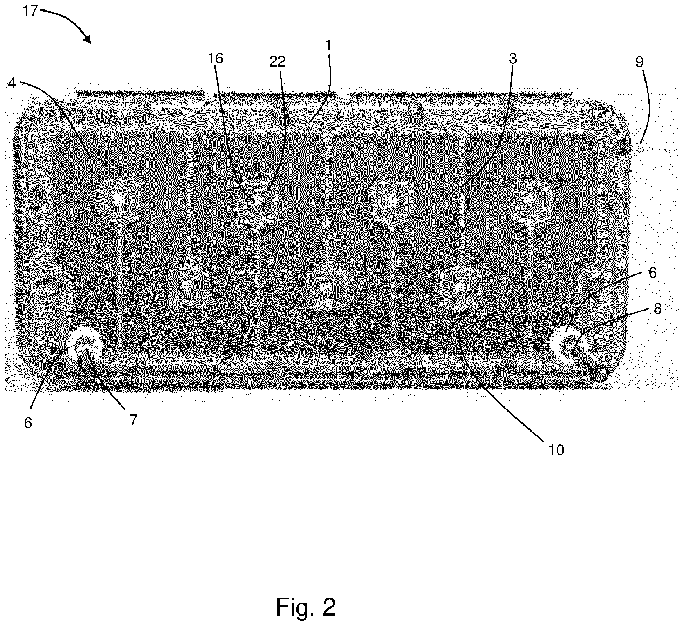

Figure 2 shows a side view of a variant of the crossflow filter device 17. This is a larger device than that shown in Figure 1, and the side plates 1, 2 and rectangular rather than square, the flow channel 10 having a greater number of hairpin bends as it winds from the inlet 7 to the outlet 8. The filtrate outlet 9, which was not visible in Figure 1, is visible in the view of Figure 2.

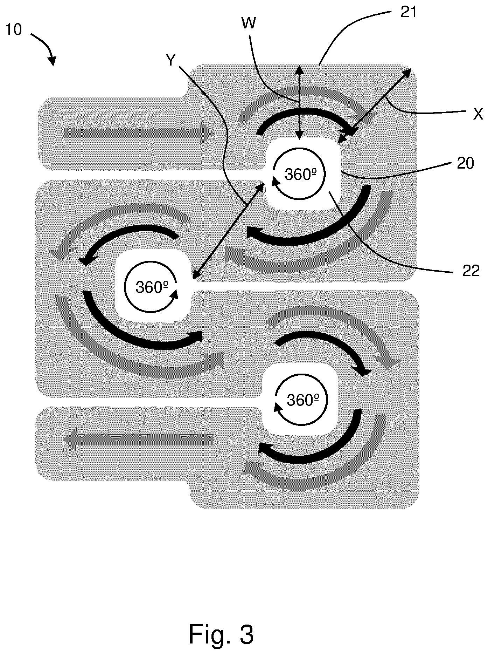

In the devices of both Figure 1 and Figure 2, the respective guide wall 3 defining the line of the inner radius of each hairpin bend of the flow channel 10 is shaped such that retentate liquid flowing along that guide wall has to turn through about 360° to complete the hairpin bend. Figure 3 shows schematically the flow channel 10 of the device of Figure 1, and the 360° turn is indicated for each of its three hairpin bends. This amount of turn, compared to for example a hairpin bend that only turns the flow through 180°, increases the turbulence in the liquid by enforcing more chaotic changes in pressure and flow velocity and thereby improves the filtration efficiency of the device. It also increases the turbulence in the liquid by increasing the lengths of the bends. More particularly, the flow around a given bend has a relatively low velocity (indicated by black block arrows in Figure 3) on the inside of the bend and relatively high velocity (indicated by grey block arrows in Figure 3) on the outside of the bend. These flows produce higher velocity gradients across the width of the channel at bends as compared to straights. As these gradients promote turbulence, increasing the total length of the bends relative to the total length of straights also improves the filtration efficiency of the device.

The line of the inner radius 20 of each hairpin bend is substantially follows a square or rectangle perimeter line. The alternating series of corners and straights of this polygonal line helps to break up laminar flow in the retentate liquid, further increasing the turbulence in the liquid.

Likewise, the line of the outer radius 21 of each hairpin bend substantially follows a square or rectangle perimeter line to match the line of the inner radius 20. The alternating series of corners and straights of the polygonal line of the outer radius also helps to break up laminar flow in the retentate liquid and promote the production of turbulence. In addition, the polygonal line of the outer radius allows the flow channel 10 to extend efficiently over the membrane 4 leaving few unused "dead" areas of membrane outside the guide walls 3. In this way, "space-filling" by the flow channel can be maximised, which in turn improves filtration efficiency.

The flow channel has a width (measured transversely to the flow direction of the retentate liquid in the plane of the membrane) over the length of the flow channel such that the ratio of the minimum width W to the maximum width X is greater than 0.5, preferably is greater than 0.6 and more preferably is greater than 0.7. In this way, significant constrictions in the flow channel which would impede the flow of retentate liquid can be avoided.

A further feature helping to promote turbulence in the retentate liquid is the location of successive hairpin bends closely together relative to the width of the flow channel 10. In particular, the distance Y between the exit point of the line of the inner radius of one hairpin bend to the entry point of the line of the inner radius of the next hairpin bend can be no more than twice the minimum width W of the flow channel measured transversely to the flow direction of the retentate liquid. In this way, the turbulence produced in the retentate liquid by one hairpin bend is quickly succeeded by the turbulence produced by the next, helping to maintain an improved filtration efficiency along the length of the flow channel.

As mentioned above, the device 17 has interconnecting members in the form of cylindrical stakes 16 which join the inner surfaces of the housing plates 1, 2. Conveniently, these stakes can be located at the centres of the hairpin bends. Thus the parts of the gasket which define the line 20 of the inner radius of each hairpin bend also form locating eyes 22 which surround the respective interconnecting members on all sides (in the plane of the membrane). This arrangement allows the gasket to be provided as a separate component which is easily assembled to and located in the device, the stakes helping to prevent movement of the gasket during and after assembly relative to the membrane and the retentate side of the housing. More particularly, to assemble the device, the stakes 16 are first joined to the retentate-side plate 1. Next the gasket is located on the retentate-side plate such that the stakes pass through the locating eyes 22. Then the filter membrane 4 and the foraminous support body are stacked in succession on the gasket, with the stakes passing through respective apertures formed in the membrane and support body. Finally, the filtrate-side plate 2 is joined to the distal ends of the stakes to complete the layered structure of the device.

Alternatively, however, each stake 16 can be formed from first and second projections which extend from respectively the inner surface of the retentate-side plate 1 and the inner surface of the filtrate-side plate 2, and which trap a small portion of the filter membrane 4 therebetween. For assembly, the gasket is positioned on the retentate-side plate such that the first projections pass through the locating eyes 22. Then the filter membrane 4 is stacked in on the gasket and the distal ends of the first projections. Finally, the foraminous support body and the filtrate-side plate 2 are stacked on the membrane such that the second projections pass through respective apertures formed in the support body, and the second projections meet the first projections with the membrane 4 trapped therebetween.

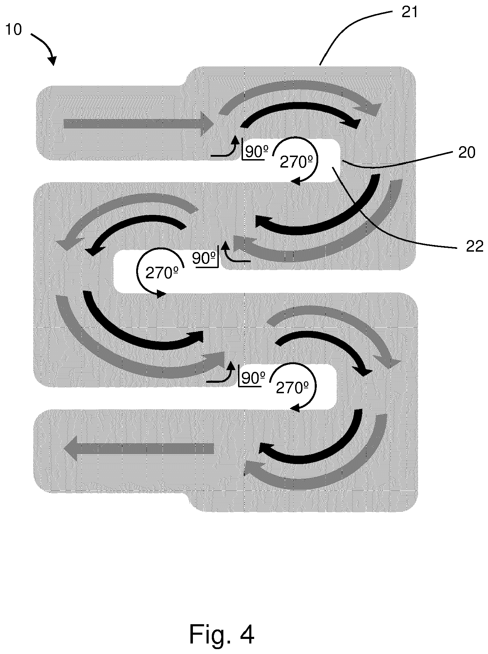

Although providing a 360° turn at each of the hairpin bends is particularly beneficial for increasing the turbulence in the retentate liquid and thereby improving the filtration efficiency of the device, it is possible to achieve similar benefits with a lower angle turn at the hairpin bends. For example, Figure 4 shows schematically the flow channel 10 of a further variant of the device of Figures 1 and 3 in which the 360° turns are replaced by 270º turns at the three hairpin bends. These lower angle turns can still increase the turbulence and improve the filtration efficiency.

A common feature of the 360° turns of Figures 1 and 3 and the 270° turns of Figure 4 is that the line 20 of the guide wall, as it arrives from the upstream side of each hairpin bend, makes an initial turn of about 90° (indicated on Figure 4) in the opposite rotational sense of the subsequent turn needed to complete the ensuing hairpin. This initial turn produces a barrier to the flow of the retentate liquid along the guide wall, forcing a change of direction that both produces turbulence and allows the subsequent turn through the ensuing hairpin to be through a higher angle.

The device discussed above has a retentate side and a filtrate side. However, other variant devices can be dual membrane devices in which first and second filter membranes sandwich opposite sides of the foraminous support body. In this way filtrate enters the collection chamber from both sides rather than just one to increase filtration speed whilst maintaining essentially the same overall device size, i.e. doubling available membrane surface area in proportion to the device size. Conveniently, such a dual device has a single inlet which feeds liquid to the flow channels of both membranes, and a corresponding single outlet.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A crossflow filter device (17) for filtering a pressurised feed liquid wherein:
the crossflow filter device comprises: a filter membrane (4); a flow channel (10) for the pressurised feed liquid which extends in a path over a retentate surface of the membrane such that the direction of flow in the channel is tangential to the retentate surface, and a filtrate derived from the feed liquid passes through the membrane leaving retentate liquid in the flow channel; and a collection chamber for the filtrate formed on an opposite, filtrate surface of the membrane;
the crossflow filter device further comprises a sealed housing having a retentate side (1) and a filtrate side (2) which enclose therebetween the flow channel (10), the filter membrane (4) and the collection chamber;
the path for the flow channel winds back and forth over the retentate surface of the membrane producing plural hairpin bends, and the crossflow filter device further comprises flow channel guide walls (3) provided at an inner surface of the retentate side (1) of the housing to define the path of the flow channel (10) over the retentate surface of the membrane; and
the respective guide wall defining the line (20) of the inner radius of each hairpin bend is shaped such that retentate liquid flowing along that guide wall has to turn through at least 270° to complete the hairpin bend.

2. The crossflow filter device (17) according to claim 1, wherein the respective guide wall defining the line (20) of the inner radius of each hairpin bend is shaped such that retentate liquid flowing along that guide wall has to turn through about 360° to complete the hairpin bend.

3. The crossflow filter device (17) according to claim 1 or 2, wherein, in the plane of the membrane, and as between successive hairpin bends: the distance (Y) between the exit point of the line (20) of the inner radius of one hairpin bend to the entry point of the line of the inner radius of the next hairpin bend is no more than twice the minimum width (W) of the flow channel measured transversely to the flow direction of the retentate liquid.

4. The crossflow filter device (17) according to any one of the previous claims, wherein the line (20) of the inner radius of each hairpin bend is substantially polygonal, having an alternating series of corners and straights, and preferably wherein the line of the inner radius of each hairpin bend substantially follows the a square or a rectangle perimeter line.

5. The crossflow filter device (17) according to claim 4, wherein the flow channel (10) has a width, measured transversely to the flow direction of the retentate liquid in the plane of the filter membrane (4), over the length of the flow channel such that the ratio of the minimum width (W) to the maximum width (X) is greater than 0.5.

6. The crossflow filter device (17) according to any one of the previous claims, wherein the flow channel guide walls (3) are resiliently deformable, thereby deforming and sealingly engaging with the filter membrane (4) to form a fluid tight seal therewith.

7. The crossflow filter device (17) according claim 6, wherein the guide walls (3) are formed by a resiliently deformable gasket such that the guide walls also sealingly engage with the inner surface of the retentate side of the housing.

8. The crossflow filter device (17) according to claim 7 further comprising plural interconnecting members which extend outside the path of the flow channel (10) to join the inner surface of the retentate side (1) of the housing to an inner surface of the filtrate side (2) of the housing and thereby strengthen the housing;
wherein the gasket has respective locating eyes (22) through which the interconnecting members pass to locate the gasket relative to the inner surface of the retentate side of the housing, the locating eyes surrounding the respective interconnecting members on all sides in the plane of the membrane.

9. The crossflow filter device (17) according to claim 8, wherein the interconnecting members are respectively located at the centres of the hairpin bends, such that the locating eyes (22) are formed by the guide walls which define the inner radii of the hairpin bends.

10. A crossflow filter device (17) for filtering a pressurised feed liquid wherein:
the crossflow filter device comprises: a filter membrane (4); a flow channel (10) for the pressurised feed liquid which extends in a path over a retentate surface of the membrane such that the direction of flow in the channel is tangential to the retentate surface, and a filtrate derived from the feed liquid passes through the membrane leaving retentate liquid in the flow channel; and a collection chamber for the filtrate formed on an opposite, filtrate surface of the membrane;
the crossflow filter device further comprises a sealed housing having a retentate side (1) and a filtrate side (2) which enclose therebetween the flow channel (10), the filter membrane (4) and the collection chamber;
the path for the flow channel winds back and forth over the retentate surface of the membrane, and the crossflow filter device further comprises flow channel guide walls (3) formed by a resiliently deformable gasket, the guide walls deforming and sealingly engaging with the filter membrane (4) and an inner surface of the retentate side of the housing to form fluid tight seals therewith, and thereby define the path of the flow channel (10) over the retentate surface of the membrane;
the crossflow filter device further comprises plural interconnecting members which extend outside the path of the flow channel (10) to join the inner surface of the retentate side (1) of the housing to an inner surface of the filtrate side (2) of the housing and thereby strengthen the housing; and
the gasket has respective locating eyes (22) through which the interconnecting members pass to locate the gasket relative to the inner surface of the retentate side of the housing, the locating eyes surrounding the respective interconnecting members on all sides in the plane of the membrane.

11. The crossflow filter device (17) according to any one of claims 8 to 10, wherein the interconnecting members are in the form of cylindrical stakes which extend axially from the inner surface of the retentate side (1) of the housing to an inner surface of the filtrate side (2) of the housing.

12. The crossflow filter device (17) according to any of the previous claims which further comprises a foraminous support body (5) located within the collection chamber, the support body providing mechanical support to the membrane (4) while allowing relatively unimpeded passage therethrough of the filtrate.

13. The crossflow filter device (17) according to any of the previous claims wherein the housing has a retentate-side plate (1) and a filtrate-side plate (2) which sandwich the flow channel guide walls and the filter membrane therebetween.

14. A method of forming the crossflow filter device according to claim 13 as dependent on claim 8 or 10, the method including:
providing the retentate-side plate (1) with the interconnecting members joined thereto;
locating the gasket on the retentate-side plate (1) such that the interconnecting members pass through the locating eyes (22);
providing a filter membrane (4) which has apertures for the interconnecting members, and stacking the membrane on the gasket such that the interconnecting members pass through the apertures; and
joining the filtrate-side plate (2) to ends of the interconnecting members distal from the retentate-side plate (1) to sandwich the flow channel guide walls (3) and the filter membrane (4) between the retentate-side plate and the filtrate-side plate.

15. A method of forming the crossflow filter device according to claim 13 as dependent on claim 8 or 10, the method including:
providing the retentate-side plate (1) with first projections extending from the inner surface thereof, and providing the filtrate-side plate (2) with corresponding second projections extending from the inner surface thereof;;
locating the gasket on the retentate-side plate (1) such that the first projections pass through the locating eyes (22);
stacking the filter membrane (4) on the gasket and ends of the first projections distal from the retentate-side plate (1); and
stacking the filtrate-side plate (2) on the filter membrane (4) such that the second projections meet their corresponding first projections and trap the filter membrane therebetween to form the interconnecting members, and such that the retentate-side plate (1) and the filtrate-side plate sandwich the flow channel guide walls (3) and the filter membrane therebetween.
